(19) Europäisches Patentamt
European Patent Office
Office européen des brevets

(11) **EP 2 797 359 B1**

(12) **EUROPEAN PATENT SPECIFICATION**

(45) Date of publication and mention
of the grant of the patent:
**31.05.2017 Bulletin 2017/22**

(21) Application number: **11878044.4**

(22) Date of filing: **22.12.2011**

(51) Int Cl.:
***H04W 28/24*** *(2009.01)*      *H04W 28/22* *(2009.01)*

(86) International application number:
**PCT/CN2011/084472**

(87) International publication number:
**WO 2013/091224 (27.06.2013 Gazette 2013/26)**

(54) **METHOD AND DEVICE FOR MANAGING QUALITY OF SERVICE**

VERFAHREN UND VORRICHTUNG ZUR VERWALTUNG DER DIENSTQUALITÄT

PROCÉDÉ ET DISPOSITIF DE GESTION DE QUALITÉ DE SERVICE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.10.2014 Bulletin 2014/44**

(73) Proprietor: **Huawei Technologies Co., Ltd. Longgang District Shenzhen, Guangdong 518129 (CN)**

(72) Inventor: **HU, Chunli Shenzhen Guangdong 518129 (CN)**

(74) Representative: **Goddar, Heinz J. et al Boehmert & Boehmert Anwaltspartnerschaft mbB Patentanwälte Rechtsanwälte Pettenkoferstrasse 20-22 80336 München (DE)**

(56) References cited:
**CN-A- 1 613 234         CN-A- 1 993 930
CN-A- 101 998 304     US-A1- 2008 205 443
US-A1- 2011 013 572   US-A1- 2011 149 875
US-B1- 7 929 567         US-B1- 7 983 162**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## TECHNICAL FIELD

Embodiments of the present invention relate to the field of wireless communications, and in particular, to a method and an apparatus for managing quality of service (QoS, Quality of Service).

## BACKGROUND

One of objectives for a network to provide a service for a user is to guarantee QoS of the user. From the perspective of network performance, the network needs to serve more users while guaranteeing the QoS of the users.

In a wireless communications system, an entire system of the QoS adopts a hierarchical structure, where an entity at one layer provides certain QoS for an entity at an upper layer, and finally the QoS at an entire system level is implemented. A core network transfers a QoS parameter corresponding to a user- or service-level QoS that needs to be guaranteed to an access network, and the access network guarantees the QoS of the user and/or the service according to a requirement of the QoS parameter.

According to a current standard, an S1 interface message only supports transfer of the QoS parameter of one user or one service, but does not act on another user or service. Therefore, it is inconvenient to adjust the QoS parameter of this user or service according to the QoS parameter of another user or service, and a manner of managing QoS is not flexible enough. Further prior art can be found in US 2008/0205443 A1, US 2011/149875 A1, US 7 983 162 B1, or US 7 929 567 B1. In particular, US 2008/0205443 A1 discloses the subject matter of the preamble of claims 1 and 7.

## SUMMARY

The present invention provides a method of claim 7 and a device as defined in claim 1, respectively, which can implement flexible management of the quality of service.

The present invention implements a quality of service parameter at an object group level, and determines quality of service corresponding to each object in the object group, so that a group of objects can share a set of quality of service parameters, thereby improving flexibility of a manner of managing the quality of service.

## BRIEF DESCRIPTION OF DRAWINGS

To describe the technical solutions in the embodiments of the present invention more clearly, the following briefly introduces accompanying drawings required for describing the embodiments or the prior art. Apparently, the accompanying drawings in the following description show merely some embodiments of the present invention, and a person of ordinary skill in the art may still derive other drawings according to these accompanying drawings without creative efforts.

FIG. 1 is a flowchart of a method for guaranteeing quality of service according to an embodiment of the present invention;
FIG. 2 is a flowchart of a method for guaranteeing quality of service according to another embodiment of the present invention;
FIG. 3 is a schematic flowchart of a process for guaranteeing quality of service according to an embodiment of the present invention;
FIG. 4 is a block diagram of a core network device according to an embodiment of the present invention;
FIG. 5 is a block diagram of a core network device according to another embodiment of the present invention; and
FIG. 6 is a block diagram of an access network device according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

The technical solutions of the present invention may be applied to various communications systems, such as, a Global System for Mobile Communications (GSM, Global System of Mobile communication), a Code Division Multiple Access (CDMA, Code Division Multiple Access) system, a Wideband Code Division Multiple Access (WCDMA, Wideband Code Division Multiple Access Wireless), a general packet radio service (GPRS, General Packet Radio Service), and a Long Term Evolution (LTE, Long Term Evolution).

A user equipment (UE, User Equipment), also referred to as a mobile terminal (Mobile Terminal), a mobile user equipment, and the like, may communicate with one or more core networks through a radio access network (for example, RAN, Radio Access Network). The user equipment may be a mobile terminal, such as a mobile phone (also referred to as a "cellular" phone) and a computer with a mobile terminal. For example, the user equipment may be a portable, pocket-sized, handheld, computer built-in, or vehicle-mounted mobile apparatus, which exchanges voice and/or data with the radio access network.

A base station may be a base transceiver station (BTS, Base Transceiver Station) in GSM or CDMA, or may be a NodeB (Node B) in WCDMA, or may be an evolved NodeB (eNB or e-NodeB, evolutional Node B) in LTE, which is not limited in the present invention. However, for ease of description, the following embodiments are described by using a Node B as an example.

An object is an object on which QoS management is implemented, and which, for example, may include a user and/or a service. For ease of description, the following uses a user or service as an example for illustration, but the object in the embodiments of the present invention is not limited to these two types.

The prior art cannot manage QoS of a group of objects, and QoS can be guaranteed only for each user or service, and therefore, it is inconvenient to adjust a QoS parameter of this user or service according to a QoS parameter of another user or service. Such a manner of managing QoS is not flexible enough.

In the future, a packet service (PS, Packet Service) may be dominant; a PS service requires a very large amount of traffic, and has large occasion randomicity. For example, for a certain user or service, a requirement for the traffic varies greatly with time; however, for a group of users or services, a requirement for total traffic possibly varies relatively slightly. Therefore, there is a requirement for guaranteeing QoS for a group of users or services.

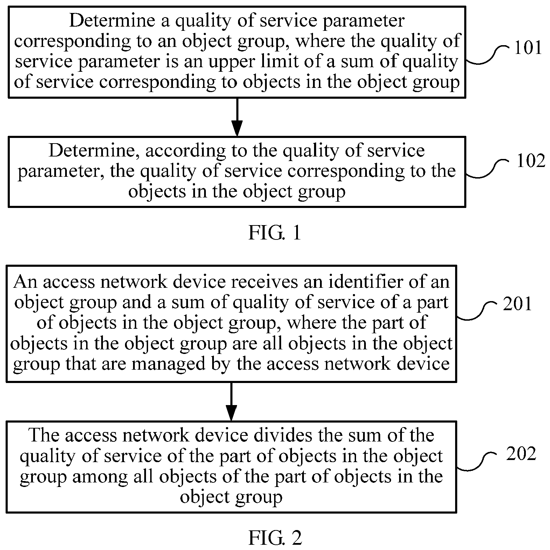

FIG. 1 is a flowchart of a method for managing quality of service according to an embodiment of the present invention. The method in FIG. 1 can be performed by a core network device (such as, a mobility management entity).

101: Determine a quality of service parameter corresponding to an object group, where the quality of service parameter is an upper limit of a sum of quality of service corresponding to objects in the object group.

An object is an object on which QoS management is implemented, and which, for example, may include a user and/or a service. A QoS parameter of the object group is the upper limit of the sum of the quality of service corresponding to the objects in the object group, that is, a total QoS quota for the entire object group. For example, an operator can allocate, according to a QoS parameter selling mode (such as a QoS subscription package) of a group of objects, the QoS parameter corresponding to the object group to the object group.

In the following, for a purpose of conciseness, a guaranteed rate is used as an example of QoS for description. However, the embodiment of the present invention is not limited to the specific example of the QoS, and may also be similarly applied to QoS of another type. These applications shall all fall within the scope of the embodiments of the present invention.

102: Determine, according to the quality of service parameter, the quality of service corresponding to the objects in the object group.

Optionally, as an embodiment, the QoS of each object in the object group can be determined according to the number of active objects in the object group. For example, it is assumed that the object group includes a total of k active objects $A_1$ to $A_k$, where k is a positive integer; then in step 102, quality of service $r_i$ corresponding to active object $A_i$ can be determined, where a value of i is each value within a range from 1 to k. $\sum_{i=1}^{k} r_i$ is less than or equal to Q, where Q is a value of the quality of service parameter.

Optionally, as another embodiment, if the object group further includes a total of p inactive objects $B_1$ to $B_p$, where p is a non-negative integer, then in step 102, it can be determined that quality of service $r_i$ corresponding to inactive object $B_j$ is 0, or it can be determined that no corresponding quality of service is allocated to inactive object $B_j$. A value of j is each value within a range from 1 to p.

Optionally, as another embodiment, the QoS of each object can be determined directly according to the number k of the active objects. For example, in an embodiment, $r_i$ is equal to the quotient of Q and k, that is, $r_i = Q/k$. Alternatively, in another embodiment, $r_i$ is equal to a value obtained by adding up the quotient of Q and k to $\delta_i$, that is, $r_i = Q/k + \delta_i$, where $\sum_{i=1}^{k} \delta_i = 0$.

For example, it is assumed that a total of guaranteed rates of a user group is Q = 5 Mbps; if currently only one user $A_1$ performs access (k = 1), the guaranteed rate of a user is $r_1 = Q/k = 5$ Mbps. If the second user $A_2$ in the group performs access, the guaranteed rate of the first user $A_1$ can be changed to 2.5 Mbps, and a guaranteed rate 2.5 Mbps of the second user $A_2$ can be generated, that is, $r_i = Q/k = 2.5$ Mbps; and the rest can be deduced by analogy. The value of $r_i$ may also be less than Q/k.

Alternatively, other factors can be considered, such as a priority; a guaranteed rate 3 Mbps ($\delta_1 = 0.5$ Mbps) is allocated to the user $A_1$, and a guaranteed rate 2 Mbps ($\delta_2 = -0.5$ Mbps) is allocated to the user $A_2$.

Optionally, as another embodiment, the QoS of each active object can be determined according to a level that the number k of the active objects reaches. Specifically, a level m that k reaches can be determined, where m is a positive integer. Then it is determined that the quality of service of each active object is q, where q is quality of service corresponding to the level m.

One level may include a certain number of objects. As a nonrestrictive example, k and m may meet any one of the following relationships: $0 < k \leq 2^{m-1} \times N$, and m = 1; and $2^{m-2} \times N < k \leq 2^{m-1} \times N$, and $m \geq 2$, where N is a positive integer. In this case, q and m can meet the following relationship: $q \leq Q/(2^{m-1} \times N)$, where Q is a value of the quality of service parameter.

For example, it is assumed that a total of guaranteed rates of a user group is Q = 5 Mbps, and the level is the first level (N = 5) when the number of users is 5 or fewer. When the number of current active users is smaller than or equal to 5, the guaranteed rate of each user is q = 1 Mbps (that is, q = Q/($2^{m-1} \times N$), where m = 1, and N = 5). The level is a second level when the number of users is 10 or fewer. Therefore, when the sixth user arrives (enters an active state, for example, performs access successfully), the guaranteed rates of existing 5 users are adjusted to 0.5 Mbps, and the guaranteed rates of the sixth to tenth users are 0.5 Mbps, that is, q = Q/($2^{m-1} \times N$), where m = 2, and N = 5. The rest can be deduced by analogy. The level is a third level when the number of users is 20 or fewer, and the guaranteed rate is q = 0.25 Mbps, and so on. A value of q may also be less than Q/($2^{m-1} \times N$).

The embodiments of the present invention are not limited to such a grading manner, and the number of objects included in each level may vary. For example, k and m may further meet the following relationship: (m-1)$\times$N<k$\leq$m$\times$N, where N is a positive integer. In this case, q and m can meet the following relationship: q$\leq$Q/(m$\times$N), where Q is a value of the quality of service parameter.

Optionally, as another embodiment, the core network device can notify an access network device of the quality of service of each object in the object group, so that the access network device manages each object according to the quality of service of each object. In this way, similar to the prior art, the access network device can manage each object according to the QoS of the object. In this case, a method for the core network device to notify the access network device of the QoS and a method for the access network device to implement the QoS management may be similar to those in the prior art, and therefore are not repeated again.

Optionally, as another embodiment, the core network device and an access network device can cooperate to complete the QoS management of the object group. The core network device may notify the access network device of an identifier of the object group and a sum of quality of service of a part of objects in the object group, so that the access network device divides the sum of the quality of service of the part of objects in the object group among all objects of the part of objects in the object group, where the part of objects in the object group are all objects in the object group that are managed by the access network device.

The embodiment of the present invention implements a quality of service parameter at an object group level, and determines quality of service corresponding to each object in the object group, so that a group of objects can share a set of quality of service parameters, thereby improving flexibility of a manner of managing the quality of service.

FIG. 2 is a flowchart of a method for managing quality of service according to another embodiment of the present invention. The method in FIG. 2 can be performed by an access network device (such as a base station).

201: The access network device receives an identifier of an object group and a sum of quality of service of a part of objects in the object group, where the part of objects in the object group are all objects in the object group that are managed by the access network device.

An object is an object on which QoS management is implemented, and which, for example, may include a user and/or a service. A QoS parameter of the object group is an upper limit of a sum of quality of service corresponding to objects in the object group, that is, a total QoS quota for the entire object group. For example, an operator can allocate, according to a QoS parameter selling mode (such as a QoS subscription package) of a group of objects, the QoS parameter corresponding to the object group to the object group.

In the following, for a purpose of conciseness, a guaranteed rate is used as an example of QoS for description. However, the embodiment of the present invention is not limited to the specific example of the QoS, and may also be similarly applied to QoS of another type. These applications shall all fall within the scope of the embodiments of the present invention.

202: The access network device identifies the part of objects in the object group according to the identifier of the object group, and divides the sum of the quality of service of the part of objects in the object group among all objects of the part of objects in the object group.

Optionally, as an embodiment, it is assumed that when the part of objects in the object group include a total of k active objects $A_1$ to $A_k$ and a total of p inactive objects $B_1$ to $B_p$, where k is a positive integer and p is a non-negative integer, the access network device allocates corresponding quality of service $r_i$ to active object $A_i$, where a value of i is each value within a range from 1 to k. $\sum_{i=1}^{k} r_i$ is less than or equal to S, and S is the sum of the quality of service of the part of objects in the object group.

Optionally, a value of S may be equally allocated to the active objects, that is, $r_i$ = S/k. For example, when the one or more objects need to send traffic through an air interface, a total guaranteed quota can be equally used; and if an object or some objects do not have any traffic, other objects can equally use the total guaranteed quota. In addition, a quality of service parameter quota may be equally or unequally allocated to the active objects according to another policy (for example, in consideration of priorities and weights of the active objects), which is not limited by the present invention.

The embodiment of the present invention implements a quality of service parameter at an object group level, and determines quality of service corresponding to each object in the object group, so that a group of objects can share a set of quality of service parameters, thereby improving flexibility of a manner of managing the quality of service.

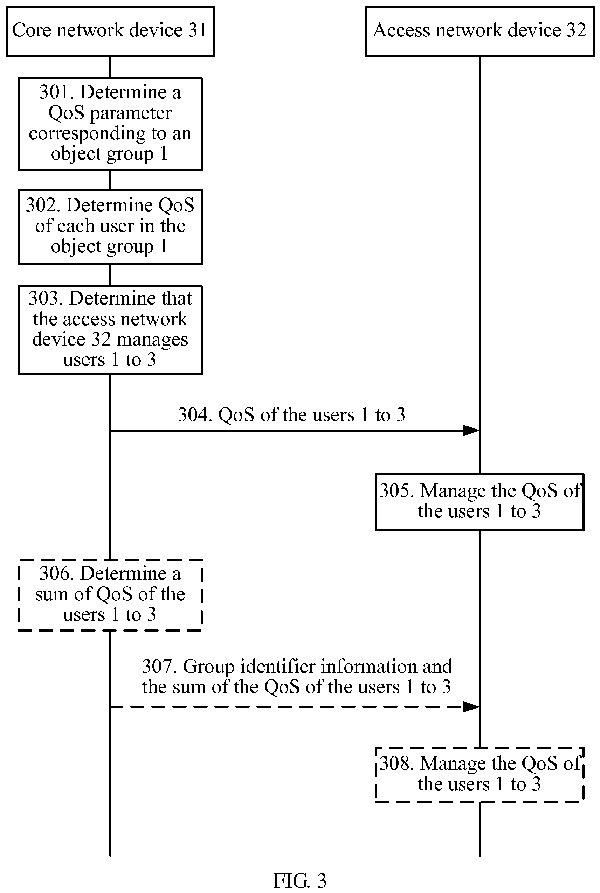

FIG. 3 is a schematic flowchart of a process for managing quality of service according to an embodiment of the present invention. In the embodiment in FIG. 3, a core network device 31 and an access network device 32 cooperate to complete QoS management of an object group.

301: The core network device 31 determines a QoS parameter corresponding to the object group.

Step 301 is a nonrestrictive example of step 101 in FIG. 1. In the embodiment of FIG. 3, it is assumed that an object is a user, and an object group 1 includes 10 users: a user 1, a user 2, a user 3, ..., and a user 10. It is assumed that the QoS parameter (such as, a total of guaranteed rates) corresponding to the object group 1 is 5 Mbps.

302: The core network device 31 determines QoS of each object in the object group according to the QoS parameter of the object group.

With reference to a manner described in step 102 in FIG. 1, the core network device 31 determines the QoS of each object according to the number of the active objects in the object group or a level that this number reaches.

For example, if 10 users 1 to 10 are all in an active state, that is, traffic needs to be transmitted between the 10 users and a network side, it can be determined according to the manner used as an example in step 102 that a guaranteed rate of each user is 0.5 Mbps.

303: The core network device 31 determines that the access network device 32 manages a part of the users in the object group 1 (for example, it is assumed that the access network device 32 manages the user 1, the user 2, and the user 3).

The core network device 31 can learn information about a base station/cell that a user belongs to, and thereby learn users managed by the access network device 32. For a manner of learning the information about the base station/cell by the core network device 31, reference may be made to the prior art, and the manner is not repeated herein again.

In addition, step 303 is performed after steps 301 and 302 in the description in FIG. 3, but the embodiment of the present invention does not limit a sequence of performing step 303 and step 301/302. For example, step 303 may be performed before step 301/302, or may be performed at the same time when step 301/302 is performed.

304: The core network device 31 notifies the access network device 32 of QoS (a guaranteed rate of 0.5 Mbps) of the users 1 to 3.

305: The access network device 32 implements, according to the QoS of the users 1 to 3 that is notified in step 304, the QoS management of the three users 1 to 3 separately, so as to guarantee the QoS of the users 1 to 3.

For a manner of notifying the QoS by the core network device 31 and a manner of implementing the QoS management by the access network device 32, reference may be made to the prior art, and details are not repeated again.

In addition to the manner in steps 304 to 305, the core network device 31 and the access network device 32 can also implement the QoS management according to the following manner in 306 to 308. For the same object group, the management manner in steps 304 to 305 or the management manner in steps 306 to 308 may be performed; and for multiple object groups, the management manner in steps 304 to 305 or the management manner in steps 306 to 308 may be performed for all the object groups, or different management manners may be performed for different object groups, which is not limited by the embodiments of the present invention.

306: The core network device 31 determines, according to the QoS of a part of users 1 to 3 (managed by the access network device 32) that is determined in step 302, a sum of the QoS of the part of the users 1 to 3.

For example, the core network device 31 can add up guaranteed rates of the users 1 to 3, to obtain 1.5 Mbps as the sum of the QoS of the part of the users 1 to 3 for the access network device 32. It should be noted that, the access network device 32 can also perform the QoS management on another object and/or object group, and separately have a corresponding sum of QoS, which is not limited by the embodiment of the present invention.

307: The core network device 31 notifies the access network device 32 of group identifier information (such as group number 1 of the object group) of the object group and the sum of the QoS of the part of the users 1 to 3.

Optionally, as another embodiment, when a core network device notifies an access network device of group identifier information (such as a group number) of the object group, the core network device can transfer the group identifier information in the following manners: (a) an SPID (Subscriber Profile ID for RAT/Frequency Priority; subscriber configuration file identifier for radio access technology/frequency priority) is used to carry the group identifier information; (b) an extended QCI (QoS Class Identifier; quality of service class identifier) is used to carry the group identifier information; (c) a field or an extended field in an S1 interface is used to carry the group identifier information. The embodiments of the present invention do not limit the manner of transferring the group identifier information.

Optionally, as another embodiment, when a core network device notifies an access network device of a sum of QoS corresponding to group identifier information, a method similar to the method of transferring QoS of a service in the conventional standard may be used. In addition, the embodiments of the present invention can implement updating of the sum of QoS of the object group, and the access network device can use a latest sum of QoS corresponding to group identifier information as a current effective sum of QoS of the object group.

For example, if a base station has received and recorded a sum of old QoS corresponding to a group number 1, the Node B performs the QoS management according to the sum of old QoS. After that, if a piece of information received by the base station includes the group number 1 and a sum of new QoS corresponding to the group number 1, the base station performs the QoS management according to the sum of new QoS. In another aspect, if the information received by the base station includes only the group number 1 but does not include the part of the QoS, the base station considers that a sum of QoS of the object group whose group number is 1 does not change, and continues to perform the QoS management according to the sum of old QoS.

308: The access network device 32 manages, according to the group identifier information and the sum of QoS that are received in step 307, quality of service of the users 1 to 3, and divides the sum of QoS among the users 1 to 3.

For example, the access network device 32 can allocate the sum (1.5 Mbps) of QoS among the users 1 to 3; for example, if the sum is equally divided, the guaranteed rate of each user is 0.5 Mbps. In addition, the access network device 32 can dynamically adjust the guaranteed rates of these users according to traffic requirements of the users 1 to 3. For example, if the user 1 has no traffic to be transmitted during a period of time, the access network device 32 can allocate a quota of the guaranteed rate of the user 1 to the user 2 and the user 3 for use, so that the guaranteed rates of the user 2 and the user 3 each increase to 0.75 Mbps. In this case, the QoS management can be implemented more flexibly.

Therefore, the embodiment of the present invention can implement QoS guarantee for a group of objects. For example, a group, or an important customer, or a family, or an operator subscribes to the QoS of a group of users from another operator, where the group of users share guaranteed data traffic or resources to which subscription is made. In this way, sharing can also be implemented. For example, when the group of users that currently use a network are few in number, each user can obtain a high resource usage and a large QoS parameter; however, when the group of users that currently use the network are many in number, each user can obtain a low resource usage and a small value of the QoS parameter. Therefore, in the embodiment of the present invention, the quality of service parameter of each object in the object group is determined according to a quality of service parameter of an object group, so that a group of objects can share a set of quality of service parameters, thereby improving flexibility of a manner of ensuring the quality of service.

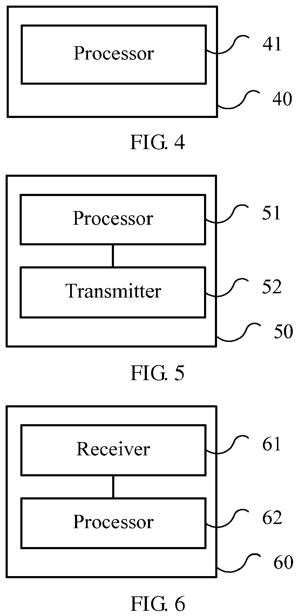

FIG. 4 is a block diagram of a core network device according to an embodiment of the present invention. An example of a core network device 40 in FIG. 4 is a mobility management entity, such as an MME or an SGSN. The core network device 40 may include a processor 41.

The processor 41 determines a quality of service parameter corresponding to an object group, where the quality of service parameter is an upper limit of a sum of quality of service corresponding to objects in the object group. The processor 41 further determines, according to the quality of service parameter, the quality of service corresponding to the objects in the object group.

The embodiment of the present invention implements a quality of service parameter at an object group level, and determines quality of service corresponding to each object in the object group, so that a group of objects can share a set of quality of service parameters, thereby improving flexibility of a manner of managing the quality of service.

A QoS parameter of the object group is the upper limit of the sum of the quality of service corresponding to the objects in the object group, that is, a total QoS quota for the entire object group. For example, an operator can allocate, according to a QoS parameter selling mode (such as a QoS subscription package) of a group of objects, the QoS parameter corresponding to the object group to the object group. When the processor 41 determines the QoS parameter corresponding to the object group, the processor 41 can (locally or remotely) read the QoS parameter from a memory that stores the QoS parameter, or can receive the QoS parameter from another source by using a receiver, which is not limited by the present invention.

FIG. 5 is a block diagram of a core network device according to another embodiment of the present invention. A core network device 50 in FIG. 5 includes a processor 51 and a transmitter 52.

The processor 51 is an example of the processor 41 in FIG. 4. Specifically, the processor 51 determines a quality of service parameter corresponding to an object group, where the quality of service parameter is an upper limit of a sum of quality of service corresponding to objects in the object group. The processor 51 further determines, according to the quality of service parameter, the quality of service corresponding to the objects in the object group.

In addition, optionally, as an embodiment, an object group includes a total of k active objects $A_1$ to $A_k$, where k is a positive integer. In this case, the processor 51 can determine quality of service $r_i$ corresponding to active object $A_i$, where a value of i is each value within a range from 1 to k, $\sum_{i=1}^{k} r_i$ is less than or equal to Q, and Q is a value of the quality of service parameter.

Optionally, as another embodiment, if the object group further includes a total of p inactive objects $B_1$ to $B_p$, where p is a non-negative integer, the processor 51 can further determine that quality of service $r_i$ corresponding to inactive object $B_j$ is 0, or determine that no corresponding quality of service is allocated to inactive object $B_j$. A value of j is each value within a range from 1 to p.

Optionally, as another embodiment, $r_i$ is equal to a quotient of Q and k; or $r_i$ is equal to a value obtained by adding a quotient of Q and k to $\delta_i$, where

$$\sum_{i=1}^{k} \delta_i = 0.$$

Optionally, as another embodiment, an object group includes a total of k active objects $A_1$ to $A_k$, where k is a positive integer. In this case, the processor 51 can determine a level m that k reaches, where m is a positive integer, and determine that the quality of service of each active object is q, where q is the quality of service corresponding to the level m.

Optionally, as another embodiment, k and m can meet any one of the following relationships: $0<k\leq 2^{m-1}\times N$, and m = 1; and $2^{m-2}\times N<k\leq 2^{m-1}\times N$, and $m\geq 2$, where N is a positive integer. In this case, q and m can meet the following relationship: $q\leq Q/(2^{m-1}\times N)$, where Q is a value of the quality of service parameter.

Optionally, as another embodiment, k and m can meet the following relationship: $(m-1)\times N<k\leq m\times N$, where N is a positive integer. In this case, q and m can meet the following relationship: $q\leq Q/(m\times N)$, where Q is a value of the quality of service parameter.

The transmitter 52 can notify an access network device of the quality of service of each object in the object group, so that the access network device manages each object according to the quality of service of each object. Alternatively, the transmitter 52 can notify the access network device of an identifier of the object group and a sum of quality of service of a part of objects in the object group, so that the access network device divides the sum of the quality of service of the part of objects in the object group among all objects of the part of objects in the object group, where the part of objects in the object group are all objects in the object group that are managed by the access network device.

Optionally, as another embodiment, the foregoing object includes a user and/or a service.

The embodiment of the present invention implements a quality of service parameter at an object group level, and determines quality of service corresponding to each object in the object group, so that a group of objects can share a set of quality of service parameters, thereby improving flexibility of a manner of managing the quality of service.

Core network devices 40 and 50 can perform operations that involve a core network device in the method embodiments in FIG. 1 to FIG. 3. To avoid repetition, detailed description is not provided again. The core network device 31 in FIG. 3 may be an example of the core network devices 40 and 50.

FIG. 6 is a block diagram of an access network device according to an embodiment of the present invention. An example of an access network device 60 in FIG. 6 is a base station or a base station controller. The access network device 60 may include a receiver 61 and a processor 62.

The receiver 61 receives an identifier of an object group and a sum of quality of service of a part of objects in the object group, where the part of objects in the object group are all objects in the object group that are managed by the access network device 60. The processor 62 identifies the part of objects in the object group according to the identifier of the object group received by the receiver 61, and divides, among all objects of the part of objects in the object group, the sum of the quality of service of the part of objects in the object group received by the receiver 61.

The embodiment of the present invention implements a quality of service parameter at an object group level, and determines quality of service corresponding to each object in the object group, so that a group of objects can share a set of quality of service parameters, thereby improving flexibility of a manner of managing the quality of service.

The access network device 60 can perform operations that involve an access network device in the method embodiments in the FIG. 1 to FIG. 3. To avoid repetition, detailed description is not provided again. The access network device 32 in FIG. 3 may be an example of the access network device 60.

Optionally, as an embodiment, when a part of objects in the object group includes a total of k active objects $A_1$ to $A_k$ and a total of p inactive objects $B_1$ to $B_p$, where k is a positive integer and p is a non-negative integer, the processor 62 allocates corresponding quality of service $r_i$ to active object $A_i$, where a value of i is each value within a range from 1 to k, $\sum_{i=1}^{k} r_i$ is less than or equal to S, and S is the sum of the quality of service of the part of objects in the object group.

Optionally, as another embodiment, the foregoing object may include a user and/or a service.

A communications system according to an embodiment of the present invention may include the foregoing core network device 40/50 or the foregoing access network device 60.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The software product is stored in a storage medium, and includes several instructions for instructing a computer device (which may be a personal computer, a server, a network device, or the like) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A core network device, comprising:

   a processor, configured to determine (101) a quality of service parameter corresponding to an object group, wherein the quality of service parameter is an upper limit of a sum of quality of service corresponding to objects in the object group, wherein
   the processor is further configured to determine (102), according to the quality of service parameter, the quality of service corresponding to the objects in the object group;
   **characterized in that**
   the object group comprises a total of k active objects $A_1$ to $A_k$, wherein k is a positive integer, and the processor is configured to determine a level m that k reaches, wherein m is a positive integer, and determine that the quality of service of each active object is q, wherein the q is the quality of service corresponding to the level m; wherein the k and m meet any one of the following relationships:

   $0 < k \leq 2^{m-1} \times N$, and m = 1; and
   $2^{m-2} \times N < k \leq 2^{m-1} \times N$, and $m \geq 2$, wherein N is a positive integer; and

   wherein the q and m meet the following relationship:

   $q \leq Q/(2^{m-1} \times N)$, wherein the Q is a value of the quality of service parameter.

2. The core network device according to claim 1, wherein the object group comprises a total of k active objects $A_1$ to $A_k$, wherein k is a positive integer, and the processor is specifically configured to determine quality of service $r_i$ corresponding to active object $A_i$, wherein a value of i is each value within a range from 1 to k, $\sum_{i=1}^{k} r_i$ is less than or equal to Q, and the Q is a value of the quality of service parameter.

3. The core network device according to claim 2, wherein if the object group further comprises a total of p inactive objects $B_1$ to $B_p$, wherein p is a non-negative integer, the processor is further configured to determine that quality of service $r_j$ corresponding to inactive object $B_j$ is 0, or determine that no corresponding quality of service is allocated to inactive object $B_j$, wherein a value of j is each value within a range from 1 to p.

4. The core network device according to claim 2, wherein the $r_i$ is equal to a quotient of Q and k; or

the $r_i$ is equal to a value obtained by adding the quotient of Q and k to $\delta_i$, wherein $\sum_{i=1}^{k} \delta_i = 0.$

**5.** The core network device according to any one of claims 1 to 4, wherein the core network device further comprises a transmitter, configured to notify an access network device of the quality of service of each object in the object group, so that the access network device manages each object according to the quality of service of each object; or configured to notify an access network device of an identifier of the object group and a sum of quality of service of a part of objects in the object group, so that the access network device divides the sum of the quality of service of the part of objects in the object group among all objects of the part of objects in the object group, wherein the part of objects in the object group are all objects in the object group that are managed by the access network device.

**6.** The core network device according to any one of claims 1 to 5, wherein the object comprises a user and/or a service.

**7.** A method for managing quality of service, comprising:

determining (101), by a core network device, a quality of service parameter corresponding to an object group, wherein the quality of service parameter is an upper limit of a sum of quality of service corresponding to objects in the object group; and
determining (102), by a core network device, according to the quality of service parameter, the quality of service corresponding to the objects in the object group;
**characterized in that**
the object group comprises a total of k active objects $A_1$ to $A_k$, wherein k is a positive integer, and the core network device is configured to determine a level m that k reaches, wherein m is a positive integer, and determine that the quality of service of each active object is q, wherein the q is the quality of service corresponding to the level m;
wherein the k and m meet any one of the following relationships:

$0 < k \leq 2^{m-1} \times N$, and m = 1; and
$2^{m-2} \times N < k \leq 2^{m-1} \times N$, and $m \geq 2$, wherein N is a positive integer; and

wherein the q and m meet the following relationship:

$q \leq Q/(2^{m-1} \times N)$, wherein the Q is a value of the quality of service parameter.

**Patentansprüche**

**1.** Kernnetzwerkvorrichtung, die Folgendes umfasst:

einen Prozessor, der ausgelegt ist zum Bestimmen (101) eines Dienstqualitätsparameters, der einer Objektgruppe entspricht, wobei der Dienstqualitätsparameter eine Obergrenze einer Summe von Dienstqualität ist, die Objekten in der Objektgruppe entspricht, wobei
der Prozessor ferner ausgelegt ist zum Bestimmen (102), gemäß dem Dienstqualitätsparameter, der Dienstqualität, die den Objekten in der Objektgruppe entspricht;
**dadurch gekennzeichnet, dass**
die Objektgruppe eine Gesamtheit von k aktiven Objekten $A_1$ bis $A_k$ umfasst, wobei k eine positive ganze Zahl ist, und der Prozessor ausgelegt ist zum Bestimmen eines Niveaus m, das k erreicht, wobei m eine positive ganze Zahl ist, und zum Bestimmen, dass die Dienstqualität von jedem aktiven Objekt q ist, wobei das q die Dienstqualität ist, die dem Niveau m entspricht;
wobei das k und das m irgendeine der folgenden Beziehungen erfüllen:

$0 < k \leq 2^{m-1} \times N$ und m=1; und
$2^{m-2} \times N < k \leq 2^{m-1} \times N$ und $m \geq 2$, wobei N eine positive ganze Zahl ist; und

wobei das q und das m die folgende Beziehung erfüllen:

$q \leq Q/(2^{m-1} \times N)$, wobei das Q ein Wert des Dienstqualitätsparameters ist.

**2.** Kernnetzwerkvorrichtung nach Anspruch 1, wobei die Objektgruppe eine Gesamtheit von k aktiven Objekten $A_1$ bis $A_k$ umfasst, wobei k eine positive ganze Zahl ist, und der Prozessor insbesondere ausgelegt ist zum Bestimmen einer Dienstqualität $r_i$, die einem aktiven Objekt $A_i$ entspricht, wobei ein Wert von i jeder Wert innerhalb eines Bereichs von 1 bis k ist, $\sum_{i=1}^{k} r_i$ kleiner oder gleich Q ist und das Q ein Wert des Dienstqualitätsparameters ist.

**3.** Kernnetzwerkvorrichtung nach Anspruch 2, wobei, falls die Objektgruppe ferner eine Gesamtheit von p inaktiven Objekten $B_1$ bis $B_p$ umfasst, wobei p eine nichtnegative ganze Zahl ist, der Prozessor ferner ausgelegt ist zum Bestimmen, dass die Dienstqualität $r_j$, die einem inaktiven Objekt $B_j$ entspricht, 0 ist,

oder zum Bestimmen, dass dem inaktiven Objekt $B_j$ keine entsprechende Dienstqualität zugeordnet ist, wobei ein Wert von j jeder Wert innerhalb eines Bereichs von 1 bis p ist.

4. Kernnetzwerkvorrichtung nach Anspruch 2, wobei die $r_i$ gleich einem Quotienten von Q und k ist; oder die $r_i$ gleich einem Wert ist, der durch Addieren des Quotienten von Q und k zu $\delta_i$ erhalten wird, wobei

$$\sum_{i=1}^{k} \delta_i = 0 \text{ ist.}$$

5. Kernnetzwerkvorrichtung nach einem der Ansprüche 1 bis 4, wobei die Kernnetzwerkvorrichtung ferner einen Sender umfasst, der ausgelegt ist zum Benachrichtigen einer Netzwerkzugangsvorrichtung über die Dienstqualität von jedem Objekt in der Objektgruppe, so dass die Netzwerkzugangsvorrichtung jedes Objekt gemäß der Dienstqualität von jedem Objekt verwalten kann; oder ausgelegt ist zum Benachrichtigen einer Netzwerkzugangsvorrichtung über eine Kennung der Objektgruppe und eine Summe der Dienstqualität eines Teils von Objekten in der Objektgruppe, so dass die Netzwerkzugangsvorrichtung die Summe der Dienstqualität des Teils von Objekten in der Objektgruppe unter allen Objekten des Teils von Objekten in der Objektgruppe aufteilt, wobei der Teil von Objekten in der Objektgruppe alle Objekte in der Objektgruppe sind, die von der Netzwerkzugangsvorrichtung verwaltet werden.

6. Kernnetzwerkvorrichtung nach einem der Ansprüche 1 bis 5, wobei das Objekt einen Benutzer und/oder einen Dienst umfasst.

7. Verfahren zum Verwalten der Dienstqualität, das folgende Schritte umfasst:

Bestimmen (101), durch eine Kernnetzwerkvorrichtung, eines Dienstqualitätsparameters, der einer Objektgruppe entspricht, wobei der Dienstqualitätsparameter eine Obergrenze einer Summe von Dienstqualität ist, die Objekten in der Objektgruppe entspricht; und
Bestimmen (102), durch eine Kernnetzwerkvorrichtung, gemäß dem Dienstqualitätsparameter, der Dienstqualität, die den Objekten in der Objektgruppe entspricht;
**dadurch gekennzeichnet, dass**
die Objektgruppe eine Gesamtheit von k aktiven Objekten $A_1$ bis $A_k$ umfasst, wobei k eine positive ganze Zahl ist, und die Kernnetzwerkvorrichtung ausgelegt ist zum Bestimmen eines Niveaus m, das k erreicht, wobei m eine positive ganze Zahl ist, und zum Bestimmen, dass die Dienstqualität von jedem aktiven Objekt q ist, wobei das q die Dienstqualität ist, die dem Niveau m entspricht;
wobei das k und das m irgendeine der folgenden Beziehungen erfüllen:

$0 < k \leq 2^{m-1} \times N$ und m=1; und
$2^{m-2} \times N < k \leq 2^{m-1} \times N$ und $m \geq 2$, wobei N eine positive ganze Zahl ist; und

wobei das q und das m die folgende Beziehung erfüllen:

$q \leq Q/(2^{m-1} \times N)$, wobei das Q ein Wert des Dienstqualitätsparameters ist.

## Revendications

1. Dispositif de réseau central, comprenant :

un processeur, configuré pour déterminer (101) un paramètre de qualité de service correspondant à un groupe d'objets, dans lequel le paramètre de qualité de service est une limite supérieure d'une somme de qualité de service correspondant à des objets dans le groupe d'objets, dans lequel
le processeur est en outre configuré pour déterminer (102), en fonction du paramètre de qualité de service, la qualité de service correspondant aux objets dans le groupe d'objets ;
**caractérisé en ce que**
le groupe d'objets comprend un total de k objets actifs $A_1$ à $A_k$, dans lequel k est un nombre entier positif et le processeur est configuré pour déterminer un niveau m que k atteint, dans lequel m est un nombre entier positif et déterminer que la qualité de service de chaque objet actif est q, dans lequel le q est la qualité de service correspondant au niveau m ;
dans lequel les k et m satisfont l'une quelconque des relations suivantes :

$0 < k \leq 2^{m-1} \times N$ et m = 1 ; et
$2^{m-2} \times N < k \leq 2^{m-1} \times N$ et $m \geq 2$, dans lequel N est un nombre entier positif ; et

dans lequel les q et m satisfont la relation suivante :

$q \leq Q/(2^{m-1} \times N)$, dans lequel le Q est une valeur du paramètre de qualité de service.

2. Dispositif de réseau central selon la revendication 1, dans lequel le groupe d'objets comprend un total de k objets actifs $A_1$ à $A_k$, dans lequel k est un nombre entier positif et le processeur est configuré de façon précise pour déterminer une qualité de service $r_i$ cor-

respondant à un objet actif $A_i$, dans lequel une valeur de i est chaque valeur dans une plage allant de 1 à k, $\sum_{i=1}^{k} r_i$ est inférieur ou égal à Q et le Q est une valeur du paramètre de qualité de service.

3. Dispositif de réseau central selon la revendication 2, dans lequel si le groupe d'objets comprend en outre un total de p objets inactifs $B_1$ à $B_p$, dans lequel p est un nombre entier non négatif, le processeur est en outre configuré pour déterminer qu'une qualité de service $r_j$ correspondant à un objet inactif $B_j$ est 0 ou déterminer qu'aucune qualité de service correspondante n'est allouée à un objet inactif $B_j$, dans lequel une valeur de j est chaque valeur dans une plage allant de 1 à p.

4. Dispositif de réseau central selon la revendication 2, dans lequel le $r_i$ est égal à un quotient de Q et de k ; ou le $r_i$ est égal à une valeur obtenue par addition du quotient de Q et de k à $\delta_i$, dans lequel

$$\sum_{i=1}^{k} \delta_i = 0.$$

5. Dispositif de réseau central selon l'une quelconque des revendications 1 à 4, dans lequel le dispositif de réseau central comprend en outre un émetteur, configuré pour notifier à un dispositif de réseau d'accès la qualité de service de chaque objet dans le groupe d'objets de telle sorte que le dispositif de réseau d'accès gère chaque objet en fonction de la qualité de service de chaque objet ; ou configuré pour notifier à un dispositif de réseau d'accès un identifiant du groupe d'objets et une somme de la qualité de service d'une partie des objets dans le groupe d'objets de telle sorte que le dispositif de réseau d'accès divise la somme de la qualité de service de la partie des objets dans le groupe d'objets parmi tous les objets de la partie des objets dans le groupe d'objets, dans lequel la partie des objets dans le groupe d'objets sont tous des objets dans le groupe d'objets qui sont gérés par le dispositif de réseau d'accès.

6. Dispositif de réseau central selon l'une quelconque des revendications 1 à 5, dans lequel l'objet comprend un utilisateur et/ou un service.

7. Procédé pour gérer une qualité de service, consistant à :

déterminer (101), au moyen d'un dispositif de réseau central, un paramètre de qualité de service correspondant à un groupe d'objets, dans lequel le paramètre de qualité de service est une limite supérieure d'une somme de qualité de service correspondant à des objets dans le groupe d'objets ; et

déterminer (102), au moyen d'un dispositif de réseau central, en fonction du paramètre de qualité de service, la qualité de service correspondant aux objets dans le groupe d'objets ;
**caractérisé en ce que**
le groupe d'objets comprend un total de k objets actifs $A_1$ à $A_k$, dans lequel k est un nombre entier positif et le dispositif de réseau central est configuré pour déterminer un niveau m que k atteint, dans lequel m est un nombre entier positif et déterminer que la qualité de service de chaque objet actif est q, dans lequel le q est la qualité de service correspondant au niveau m ;
dans lequel les k et m satisfont l'une quelconque des relations suivantes :

$0 < k \leq 2^{m-1} \times N$ et m = 1 ; et
$2^{m-2} \times N < k \leq 2^{m-1} \times N$ et $m \geq 2$, dans lequel N est un nombre entier positif ; et

dans lequel les q et m satisfont la relation suivante :

$q \leq Q/ (2^{m-1} \times N)$, dans lequel le Q est une valeur du paramètre de qualité de service.

Determine a quality of service parameter corresponding to an object group, where the quality of service parameter is an upper limit of a sum of quality of service corresponding to objects in the object group — 101

Determine, according to the quality of service parameter, the quality of service corresponding to the objects in the object group — 102

FIG. 1

An access network device receives an identifier of an object group and a sum of quality of service of a part of objects in the object group, where the part of objects in the object group are all objects in the object group that are managed by the access network device — 201

The access network device divides the sum of the quality of service of the part of objects in the object group among all objects of the part of objects in the object group — 202

FIG. 2

```
┌─────────────────────────┐                    ┌─────────────────────────┐
│ Core network device 31  │                    │ Access network device 32│
└─────────────────────────┘                    └─────────────────────────┘
            │                                               │
   ┌────────────────────┐                                   │
   │  301. Determine a  │                                   │
   │  QoS parameter     │                                   │
   │  corresponding to an│                                  │
   │  object group 1    │                                   │
   └────────────────────┘                                   │
            │                                               │
   ┌────────────────────┐                                   │
   │ 302. Determine QoS │                                   │
   │  of each user in the│                                  │
   │   object group 1   │                                   │
   └────────────────────┘                                   │
            │                                               │
   ┌────────────────────┐                                   │
   │ 303. Determine that│                                   │
   │  the access network│                                   │
   │  device 32 manages │                                   │
   │    users 1 to 3    │                                   │
   └────────────────────┘                                   │
            │                                               │
            │  304. QoS of the users 1 to 3                 │
            │──────────────────────────────────────────────▶│
            │                                               │
            │                              ┌────────────────────┐
            │                              │ 305. Manage the QoS of│
            │                              │    the users 1 to 3 │
            │                              └────────────────────┘
            │                                               │
   ┌ ─ ─ ─ ─ ─ ─ ─ ─ ─ ┐                                    │
   │  306. Determine a  │                                   │
   │  sum of QoS of the │                                   │
   │     users 1 to 3   │                                   │
   └ ─ ─ ─ ─ ─ ─ ─ ─ ─ ┘                                    │
            │                                               │
            │  307. Group identifier information and        │
            │  the sum of the QoS of the users 1 to 3       │
            │ ─ ─ ─ ─ ─ ─ ─ ─ ─ ─ ─ ─ ─ ─ ─ ─ ─ ─ ─ ─ ─ ─▶│
            │                                               │
            │                              ┌ ─ ─ ─ ─ ─ ─ ─ ─ ─ ┐
            │                              │308. Manage the QoS of│
            │                              │   the users 1 to 3 │
            │                              └ ─ ─ ─ ─ ─ ─ ─ ─ ─ ┘
            │                                               │
```

FIG. 3

Processor — 41

— 40

FIG. 4

Processor — 51

Transmitter — 52

— 50

FIG. 5

Receiver — 61

Processor — 62

— 60

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080205443 A1
- US 2011149875 A1
- US 7983162 B1
- US 7929567 B1